# EUROPÄISCHE PATENTANMELDUNG

(11) **EP 3 168 815 A1**
(43) Veröffentlichungstag der Anmeldung: **17.05.2017**
(21) Anmeldenummer: 15194735.5
(22) Anmeldetag: 16.11.2015
(51) Int. Cl.: G07F 13/06

(54) **SYSTEM MIT GETRÄNKEZUBEREITUNGSMASCHINE, VERFAHREN UND COMPUTERPROGRAMM ZU DESSEN ANSTEUERUNG**

(71) Anmelder: Qbo Coffee GmbH, 8304 Wallisellen (CH)
(72) Erfinder: Mathure, Gaurabh, Brooklyn, NY 11205 (US); Marchetti, Cesar, New York, NY 10282 (US); Seo, Young, New York, NY 10128 (US); Robinson, Phil, Brooklyn, NY 11201 (US); Schwerdtfeger, Sophie, 8008 Zürich (CH)
(74) Vertreter: Frei Patent Attorneys

(57) **Zusammenfassung**

Ein Verfahren zum Betrieb einer Getränkezubereitungsmaschine (1) dient zur Herstellung eines Gesamtproduktes aus einem ersten Teilprodukt und mindestens einem zweiten Teilprodukt und einem dritten Teilprodukt. Es weist mindestens die folgenden Schritte auf:
• Erfassen einer Benutzereingabe zur Spezifikation dreier Mengenanteile (21, 22, 23), wobei eine graphische Darstellung der Mengenanteile (21, 22, 23) dargestellt wird, mit jeweils einer Anteilsanzeige (41, 42, 43) pro Mengenanteil, wobei eine Grösse der Anteilsanzeige (41, 42, 43) im wesentlich proportional zum entsprechenden Mengenanteil (21, 22, 23) ist, und die Grösse mindestens einer der Anteilsanzeigen (41, 42, 43) und damit des entsprechenden Mengenanteils (21, 22, 23) nach Massgabe einer Benutzereingabe anpassbar ist;
• Herstellen des Gesamtproduktes als Kombination der drei Teilprodukte mit Mengen entsprechend den spezifizierten Mengenanteilen (21, 22, 23). Die Getränkezubereitungsmaschine umfasst ein Mobiltelefon als Eingabemittel.

## Beschreibung

Die Erfindung betrifft Getränkezubereitungsmaschinen zum Zubereiten von Getränken oder dergleichen aus einer Portionspackung mit einer Portionsverpackung (bspw. Kapsel) und einem in der Portionsverpackung enthaltenen Extraktionsgut (bspw. Kaffee). Sie betrifft insbesondere ein System mit einer Getränkezubereitungsmaschine, ein Verfahren zu deren Betrieb und ein Computerprogramm zu deren Ansteuerung.

Getränkezubereitungsmaschinen zum Zubereiten von Getränken oder dergleichen aus einem in einer Portionsverpackung vorhandenen Extraktionsgut sind beispielsweise als Kaffee- oder Espressomaschinen bekannt. In vielen entsprechenden Systemen sind die Portionsverpackungen als Kapsel ausgebildet, in denen das Extraktionsgut bspw. luftdicht abgeschlossen ist. Für die Extraktion wird die Kapsel angestochen, beispielsweise an zwei einander gegenüberliegenden Seiten. Auf der ersten Seite wird dann eine Extraktionsflüssigkeit - im Allgemeinen heisses Wasser - eingeleitet. Auf der zweiten Seite wird das Extraktionsprodukt aus der Kapsel ausgeleitet. Dies geschieht in einem sogenannten Brühmodul.

Neben einem Brühmodul können eine oder mehrere weitere Einheiten zum Fördern und Beifügen einer weiteren Getränkekomponente wie beispielsweise Milch vorliegen. So kann die Getränkezubereitungsmaschine ein Getränk oder allgemein gesprochen ein Gesamtprodukt aus zwei Teilprodukten herstellen.

EP 2 155 023 B1 offenbart ein Getränkezubereitungsmodul mit einem graphischen Interface, auf welchem ein Füllstandssymbol, welches einen Füllstand eines Gefässes repräsentiert, durch Berühren des graphischen Interfaces verschoben werden kann.

WO 2007/003062 A1 zeigt einen Heissgetränkeautomaten, bei welchem an einer Bedieneinheit mittels "+/-" Tastensymbolen eine Menge von Kaffee und eine Menge von Milch zur Zubereitung eines Milchkaffees eingestellt werden kann.

Es ist eine mögliche Aufgabe der Erfindung, ein System mit einer Getränkezubereitungsmaschine, ein Verfahren zum Betrieb einer Getränkezubereitungsmaschine und ein Computerprogramm zur Bedienung einer Getränkezubereitungsmaschine zu schaffen, welche eine vereinfachte Bedienung ermöglichen.

Eine weitere mögliche Aufgabe ist, ein solches System, Verfahren und Computerprogramm zu schaffen, welche die Herstellung einer grossen Vielfalt von Getränkevarianten ermöglichen.

Mindestens eine dieser Aufgaben lösen ein System, ein Verfahren und ein Computerprogramm gemäss den entsprechenden Patentansprüchen.

Das **Verfahren** zum Betrieb einer Getränkezubereitungsmaschine dient zur Herstellung eines Gesamtproduktes aus einem ersten Teilprodukt und mindestens einem zweiten Teilprodukt. Es weist mindestens die folgenden Schritte auf:
- Erfassen einer Benutzereingabe zur Spezifikation eines ersten Mengenanteils und mindestens eines zweiten Mengenanteils;
- Herstellen des Gesamtproduktes als Kombination eines ersten Teilprodukts und mindestens eines zweiten Teilprodukts, mit einer Menge des ersten Teilprodukts entsprechend dem ersten Mengenanteil und einer Menge des zweiten Teilprodukts entsprechend dem zweiten Mengenanteil.

Es kann also ein Benutzer die Mengenanteile der Teilprodukte am Gesamtprodukt festlegen, wonach die Getränkezubereitungsmaschine automatisch die Zubereitung durchführt. Es ist damit eine vom Benutzer mengenmässig vorgebbare Kombination von Teilprodukten herstellbar, ohne dass der Benutzer selber die Mengen kontrollieren muss, beispielsweise durch Überwachen des Füllstandes eines Behälters und manuelles Ein- und Ausschalten eines Ventils oder einer Pumpe.

Dabei weist das Gesamtprodukt zusätzlich ein drittes Teilprodukt auf, spezifiziert die Benutzereingabe einen dritten Mengenanteil und umfasst das Gesamtprodukt die Kombination mit dem dritten Teilprodukt entsprechend dem dritten Mengenanteil.

Es kann also ein Benutzer die Mengenanteile der Teilprodukte am Gesamtprodukt festlegen, wonach die Getränkezubereitungsmaschine automatisch die Zubereitung durchführt. Es ist damit eine vom Benutzer mengenmässig vorgebbare Kombination von Teilprodukten herstellbar, ohne dass der Benutzer selber die Mengen kontrollieren muss, beispielsweise durch Überwachen des Füllstandes eines Behälters und manuelles Ein- und Ausschalten eines Ventils oder einer Pumpe.

Damit ist, dank der Möglichkeit zur Variation der Anteile von drei Teilprodukten, eine sehr grosse Variabilität des Gesamtproduktes realisierbar.

Es wird im Schritt des Erfassens der Benutzereingabe eine graphische Darstellung der Mengenanteile dargestellt, mit jeweils einer Anteilsanzeige pro Mengenanteil, wobei eine Grösse der Anteilsanzeige im wesentlich proportional zum entsprechenden Mengenanteil ist, und die Grösse mindestens einer der Anteilsanzeigen und damit des entsprechenden Mengenanteils nach Massgabe einer Benutzereingabe anpassbar ist.

Damit ist eine intuitiv und unmittelbar einsichtige und benutzerfreundliche Eingabe der Mengenanteile möglich. Die Anzeige kann an einem Bildschirm oder flächigen Displayelement erfolgen, aber alternativ auch durch eine Reihe von Anzeigeelementen wie beispielsweise farbveränderliche Leuchtdioden.

Ein Mengenanteil kann im Verfahren als absolute Grösse (beispielsweise Milliliter, Pumpenlaufdauer, Pumpenfördermenge pro Zeiteinheit) oder als relative Grösse bezogen auf ein Referenzvolumen, beispielsweise ein Gesamtvolumen eines Behälters übermittelt und verarbeitet werden.

In einer Ausführungsform sind die Anteilsanzeigen aneinander grenzende Abschnitte einer linearen Darstellung der Anteile auf einem berührungsempfindlichen Bildschirm oder Touchscreen. Eine solche Darstellung entspricht einem gestapelten Säulendiagramm oder Balkendiagramm.

In einer Ausführungsform werden an Grenzen zwischen den Abschnitten Einstellsymbole dargestellt, und ist die Grösse der Anteilsanzeigen durch Verschieben der Einstellsymbole durch den Benutzer anpassbar. Ein Benutzer kann also, wie für die Bedienung von Touchscreens allgemein bekannt, den Bildschirm an der Stelle, wo ein Einstellsymbol dargestellt wird, mit einem Finger oder Stift berühren, worauf das Einstellsymbol einer Bewegung des Fingers oder Stift mindestens entlang einer Dimension des Touchscreens automatisch folgt, und beim Entfernen des Fingers oder Stifts - an einer ggf. anderen Stelle auf dem Touchscreen - an einer dieser Stelle entsprechenden Position auf dem Touchscreen dargestellt bleibt. Damit ist ein entsprechender Mengenanteil definiert.

In einer Ausführungsform sind Grenzen zwischen den Abschnitten anpassbar, indem beim Verschieben des Fingers oder Stifts auf dem Bildschirm diejenige Grenze verschoben wird, die beim Berühren des Bildschirms (vor dem Verschieben) der Stelle der Berührung am nächsten war, oder deren Abstand zu dieser Stelle kleiner als ein Mindestabstand ist. In einer verwandten Ausführungsform werden beide Grenzen desjenigen Abschnittes, in welchem die Stelle der Berührung liegt, entsprechend der Bewegung des Fingers oder Stiftes verschoben. In diesen Ausführungsformen kann auf Einstellsymbole verzichtet werden.

In einer Ausführungsform sind die Anteilsanzeigen Teil einer bildlichen Darstellung von übereinander geschichteten Anteilen der Teilprodukte am Gesamtprodukt. Die Anteilsanzeigen können jeweils eine symbolische Darstellung des entsprechenden Teilprodukts unter Verwendung von Farbe und/oder Struktur des Teilprodukts beinhalten.

Damit ist eine intuitiv noch leichter erfassbare Darstellung des zur erzeugenden Gesamtproduktes möglich und entsprechend eine effizientere Eingabe von Benutzerwünschen.

In einer Ausführungsform ist in der bildlichen Darstellung der Anteilsanzeigen in einem Bereich, in welchem Anteilsanzeigen aneinander grenzen, die Darstellung der Teilprodukte nach Massgabe der aneinander grenzenden Teilprodukte angepasst.

In einer Ausführungsform ist in der bildlichen Darstellung der Anteilsanzeigen die Darstellung eines Teilproduktes nach Massgabe des Vorhandenseins eines zweiten Teilproduktes angepasst.
Diese beiden Möglichkeiten zur Anpassung der Darstellung sind einzeln oder miteinander kombiniert einsetzbar. Sie erlauben eine naturalistischere Darstellung eines Idealbildes des Gesamtproduktes und damit eine intuitiv einfache Bedienung.

In einer Ausführungsform zeigen die Anteilsanzeigen eine bildliche Anzeige der Anteile in einer bildlichen Darstellung eines Behälters.

In einer Ausführungsform ist das erste Teilprodukt Kaffee und das zweite Teilprodukt Milch oder Milchschaum. Insbesondere ist das erste Teilprodukt Kaffee, das zweite Teilprodukt Milch und das dritte Teilprodukt Milchschaum. Mit der Bezeichnung als "erstes" oder "zweites" Teilprodukt etc. ist nicht unbedingt eine zeitliche Reihenfolge der Herstellung der Teilprodukte gemeint: es kann beispielsweise das zweite Teilprodukt vor dem ersten Teilprodukt hergestellt und in den Behälter abgegeben werden. Auch können zwei Teilprodukte gleichzeitig hergestellt und abgegeben werden.

In einer Ausführungsform wird bei Anpassen eines der Mengenanteile eine Summe aller Mengenanteile auf eine Gesamtmenge begrenzt. Dies kann beispielsweise geschehen, indem, wenn die Gesamtmenge erreicht ist, eine Anpassung der Mengenanteile zu höheren Mengen hin nicht möglich ist. Es kann dann mit anderen Worten keine der Anteilsanzeigen zu höheren Mengen hin verschoben werden. Es muss der Benutzer, bevor einer der Mengenanteile erhöht werden kann, einen der anderen Mengenanteile reduzieren. Alternativ kann das Begrenzen geschehen, indem beim Erhöhen eines der Mengenanteile nach dem Erreichen der Gesamtmenge die Mengenanteile eines der anderen Mengenanteile oder beider der anderen Mengenanteile automatisch reduziert werden. Wenn beide anderen Mengenanteile reduziert werden, können die beiden anderen Mengenanteile proportional zueinander reduziert werden.

In einer Ausführungsform ist das zweite Teilprodukt Milch und das dritte Teilprodukt Milchschaum, und ist ein zweiter Mengenanteil entsprechend einer Menge Milch nach unten auf einen unteren Wert begrenzt, der eine Funktion des dritten Mengenanteils entsprechend einer Menge Milchschaum ist. Damit kann der Tatsache Rechnung getragen werden, dass beim Erzeugen von Milchschaum in der Regel ein gewisser Anteil von nicht geschäumter Milch anfällt. Dieser Anteil kann anhand von experimentell ermittelten und im Bediengerät oder der Steuereinheit ausgeführten Funktionen, welche optional auch von messbaren Parametern abhängen können, bestimmt werden. Zum einen kann daher ein Mengenanteil der Milch auf einen Minimalwert entsprechend der Menge von zu erzeugendem Milchschaum festgelegt werden, und entsprechend auch die zugehörige Anteilsanzeige dargestellt werden. Zum anderen kann beim Erzeugen der Teilprodukte Milch und Milchschaum berücksichtigt werden, dass ein Anteil von Milch schon beim Erzeugen des Michschaums anfällt, und kann daher der zu fördernde Anteil reiner Milch entsprechend reduziert werden. Beispielsweise kann berücksichtigt werden, dass beim Schäumen jeweils Milch mit einem Volumenanteil von 30% des erzeugten Volumenanteils von Milchschaum anfällt.

In einer Ausführungsform weisen zwei der Mengenanteile ein konstantes Verhältnis zueinander auf. Beispielsweise gilt dies für einen zweiten Mengenanteil entsprechend einer Menge Milch und für einen dritten Mengenanteil entsprechend einer Menge Milchschaum. Bei einer Anpassung eines dieser Mengenanteile wird der andere entsprechend dem Verhältnis ebenfalls angepasst. Dies kann zweckmässig sein, wenn eine Milchschäumeinheit darauf ausgelegt ist, Milch und Milchschaum in nur diesem konstanten Verhältnis zu erzeugen.

In einer Ausführungsform kann ein erster Mengenanteil nur entweder den Wert Null oder einen Wert annehmen, der über einem Mindestwert des ersten Mengenanteils liegt. Mit anderen Worten: der erste Mengenanteil kann keine Werte annehmen, die grösser als Null und kleiner als der genannte Mindestwert sind. Dabei ist insbesondere das erste Teilprodukt - entsprechend dem ersten Mengenanteil - Kaffee. Damit wird dem Umstand Rechnung getragen, dass beim Zubereiten eines (Kapsel)Kaffees stets eine gewisse Minimalmenge von heissem Wasser durch die Kaffeekapsel gepresst werden muss. Die genannte Begrenzung des ersten Mengenanteils reflektiert also den Umstand, dass entweder gar kein Kaffee oder dann nur eine gewisse Mindestmenge, beispielsweise 20 ml oder mehr zubereitet werden kann. Dasselbe kann auch für andere Teilprodukte gelten. So ist beispielsweise das Aufschäumen nur sehr geringer Milchmengen technisch schwierig und kann ausgeschlossen werden.

Ebenso sind Höchstmengen für die einzelnen Mengenanteile denkbar. So kann beispielsweise die Wassermenge, die zum Brühen einer Kaffeekapsel verwendet wird, nach oben begrenz werden, um eine durch eine zu lange Brühzeit verursachte Überextraktion und die entsprechenden geschmacklichen Nachteile zu verhindern. Die Höchstmengen der Mengenanteile können auch einem Fassungsvermögen von Vorratsbehältern wie z.B. einem Wassertank oder eine Milchtank entsprechen.

In einer Ausführungsform weist das Verfahren als weiteren Schritt auf: Erfassen einer Benutzereingabe zur Spezifikation einer Behältergrösse oder Gesamtmenge des Gesamtprodukts. Damit kann das Verfahren an die Grösse verschiedener zu verwendeter Behälter angepasst werden, wobei die in dieser Wiese spezifizierte Gesamtmenge verwendet wird, um die Summe der verschiedenen Mengenanteile zu begrenzen.

In einer Ausführungsform weist das Verfahren als weiteren Schritt auf: Erfassen einer Benutzereingabe zur Spezifikation einer Temperaturauswahl für mindestens eines der Teilprodukte.

In einer Ausführungsform weist das Verfahren auch den Schritt auf des Zuführens von Milch und des Bildens von Milchschaum mittels einer gemeinsamen Zusatzeinheit, und optional auch des Erwärmens der Milch und/oder des Milchschaums. Damit ist es möglich, mit nur einer Zusatzeinheit und damit mit relativ geringem Aufwand zwei weitere Komponenten zur Zubereitung eines Getränkes zu bilden.

In Kombination mit den oben beschriebenen Einstellmöglichkeiten der Mengenanteile von Teilprodukten kann somit ein Getränk, insbesondere ein kaffeebasiertes Getränk erzeugt werden, welches ein durch den Benutzer in einfacher Weise einstellbares Mengenverhältnis von Milch und Milchschaum aufweist.

Das **System** mit einer Getränkezubereitungsmaschine zum Herstellen eines Gesamtprodukts aus mindestens drei Teilprodukten weist auf:
- Eingabemittel zum Erfassen einer Benutzereingabe zur Spezifikation eines ersten Mengenanteils und mindestens eines zweiten Mengenanteils und eines dritten Mengenanteils;
- Zubereitungseinheiten zum Herstellen des Gesamtproduktes als Kombination eines ersten Teilprodukts und mindestens eines zweiten Teilprodukts und eines dritten Teilprodukts, mit einer Menge des ersten Teilprodukts entsprechend dem ersten Mengenanteil und einer Menge des zweiten Teilprodukts entsprechend dem zweiten Mengenanteil und einer Menge des dritten Teilprodukts entsprechend dem dritten Mengenanteil.

In einer Ausführungsform sind die Eingabemittel Teil der Getränkezubereitungsmaschine, beispielsweise eine Bedieneinheit derselben. Es ist also kein weiteres, von der Getränkezubereitungsmaschine getrenntes Gerät zum Erfassen einer Benutzereingabe erforderlich.

In einer Ausführungsform sind die Eingabemittel an einem Bediengerät ausgebildet, welches von der Getränkezubereitungsmaschine getrennt ist. Das Bediengerät weist eine Eingabevorrichtung und eine Ausgabevorrichtung auf, die als Touchscreen kombiniert sein können, sowie eine Datenverarbeitungseinheit und eine Kommunikationseinheit zur Kommunikation mit der Getränkezubereitungsmaschine. Das Bediengerät kann ein mobiles, insbesondere ein tragbares Gerät sein, beispielsweise ein Mobiltelefon oder Smartphone, oder ein funktional gleichwertiges Gerät wie eine Smartwatch oder ein "wearable computer". Das Bediengerät kann auch fest installiert sein, beispielsweise als Teil einer Gebäude- oder Küchenautomatisierungsanlage.

Dank dem Bediengerät können Bedienungselemente, insbesondere die Eingabevorrichtung und Ausgabevorrichtung des Bediengerätes, und dessen Programmierbarkeit und Rechenleistung zur Ansteuerung der Getränkezubereitungsmaschine genutzt werden.

Das Bediengerät ist zur Ausführung mindestens eines Teiles des beschriebenen Verfahrens ausgebildet. Das Bediengerät kommuniziert über eine Kommunikationsverbindung mit der Getränkezubereitungsmaschine. Dabei werden typischerweise Daten an die Getränkezubereitungsmaschine übertragen, welche repräsentativ sind für eine Behälterauswahl oder ein Gesamtvolumen, absolute oder relative Mengenanteile und optional weitere Parameter von Teilprodukten, wie beispielsweise Temperatur, Reihenfolge der Zubereitung von Teilprodukten, Name des Getränkes, Name des Benutzers, Zubereitungshinweise und -empfehlungen, Kapselpräferenz. Weitere Daten können Bestätigungseingaben sein, welche dem System anzeigen, dass der Benutzer eine angezeigte Benutzeranweisung ausgeführt hat. Von der Getränkezubereitungsmaschine an das Bediengerät können anzuzeigende Initialwerte für Mengenanteile, Benutzeranweisungen etc. übermittelt werden.

Mit dem Begriff "Interfaceeinheit" werden im Folgenden sowohl eine Bedieneinheit der Getränkezubereitungsmaschine als auch ein von der Getränkezubereitungsmaschine getrenntes Bediengerät bezeichnet. Eine Interfaceeinheit kann auch zur berührungslosen Steuerung, beispielsweise als Gestensteuerung oder Sprachsteuerung ausgebildet sein.

In einer Ausführungsform weist das System eine Zusatzeinheit auf, welche sowohl zum Zuführen von Milch als zweitem Teilprodukt, optional unter Erwärmen der Milch, als auch zum Bilden und Zuführen von Milchschaum als drittem Teilprodukt zum Gesamtprodukt ausgebildet ist. Dabei ist ein Mengenanteil an Milchschaum vorgebbar. Die Zusatzeinheit kann damit gesteuert werden, diesen vorgegebenen Mengenanteil (dritter Mengenanteil) an Milchschaum zu erzeugen, sowie eine vorgegebene Menge (zweiter Mengenanteil) an Milch.

In einer Ausführungsform weist eine solche Zusatzeinheit, im Folgenden auch Milchschäumeinheit genannt, eine Zahnradpumpe auf. Die Zahnradpumpe ist eingangsseitig mit einer Milchzuführleitung und einer Luftzuführung verbunden. Dabei ist ein Betriebsparameter abhängig von einem Messwert und/oder einer Benutzereingabe verstellbar.

Mit "Verstellen" ist hier die Einflussnahme auf den mindestens einen Betriebsparameter der Milchschäumeinheit gemeint, welcher beeinflusst, wie diese während eines aktiven Milchschäumbetriebs wirkt; die Verstellbarkeit ist also verschieden von einem blossen "ein/aus", wie das von andockbaren Milchschäumergeräten gemäss Stand der Technik bekannt ist. Die Verstellbarkeit erfolgt insbesondere derart, dass ein vom Benutzer vorgegebener und/oder von einer Steuerung vorgegebener Parameter einen Einfluss auf die Eigenschaften und/oder die Quantität des erzeugten Milchschaums hat.

Die Erfindung beruht unter anderem auf der Erkenntnis, dass Eigenschaften von erzeugtem Milchschaum auch von Parametern abhängen, die gar nicht a priori bekannt sein können. Der Erfinder der vorliegenden Erfindung hat in systematischen Versuchen festgestellt, dass sowohl die Temperatur als auch der Fettgehalt als auch andere Beschaffenheiten der Milch einen entscheidenden Einfluss auf die Schaumzubereitung haben.

Eine Ansteuerung der Milchschäumeinheit, welche den Betriebsparameter abhängig von der Benutzereingabe und/oder dem Messwert einstellt, kann als Teil des Milchschäumergeräts vorhanden oder extern, in der Getränkezubereitungsmaschine angeordnet sein.

Als das Verstellen beeinflussender Messwert kommt ein unmittelbar an der Milch gemessener Wert in Frage, bspw. die Milchtemperatur und/oder die Leitfähigkeit und/oder eine andere Eigenschaft der Milch als solcher. Ergänzend oder alternativ kommt auch ein in der Getränkezubereitungsmaschine ermittelter Wert in Frage, bspw. ein zur Erkennung einer eingeworfenen Getränkekapsel in einem Kapselerkennungsmodul anhand eines Labels oder anhand von Farbe und/oder Form der Kapsel dienendes Messresultat.

Eine das Verstellen beeinflussende Benutzereingabe kann die unmittelbare Eingabe des Betriebsparameters sein, oder auch eine Eingabe welche den Betriebsparameter indirekt beeinflusst bspw. über die Wahl eines bestimmten Programms über die Getränkezubereitungsmaschine (bspw. "Latte Macchiato dunkel", "Latte Macchiato hell", "Cappuccino hell" oder dergleichen).

Die Verstellbarkeit der Milchschäumeinheit kann eine Verstellbarkeit der Zahnradpumpen-Drehzahl sein; diese kann bspw. je nach Beschaffenheit der Zahnradpumpe bzw. eines zugehörigen Elektromotors regelbar und daher direkt ansteuerbar oder bloss indirekt bspw. über die Pumpenleistung beeinflussbar sein. In Ausführungsformen weist die Milchschäumeinheit ausgangsseitig der Zahnradpumpe eine Drossel auf; eine solche kann durch eine Verengung des Kanals für die geschäumte Milch gebildet werden. Das Zusammenspiel von Zahnradpumpen-Drehzahl und Drossel wird einen direkten Einfluss auf die Kompression der Luft haben (Milch als Flüssigkeit ist inkompressibel, und andere die Schäumung beeinflussende Parameter wie die Oberflächenspannung sind konstant), und damit auch auf die Eigenschaften der Luftbläschen im Schaum.

Auch andere Parameter der Zahnradpumpe, beispielsweise ein Zahnradabstand, können als der Betriebsparameter gewählt werden.

Ergänzend oder alternativ kann die Verstellbarkeit eine Verstellbarkeit der Luftzuführung sein oder beinhalten. Zu diesem Zweck kann eine Ventileinheit, durch welche die Luftzuführung erfolgt, einen variablen aktiven Ventilquerschnitt (totaler Querschnitt der Öffnung, durch welche Luft einströmt). In einer Ausführungsform weist eine Ventileinheit insbesondere eine Mehrzahl von Ventilelementen auf, die unabhängig voneinander geöffnet oder geschlossen werden können. Dadurch können verschiedene Ventilöffnungszustände erwirkt werden.

Solche Ventilelemente können eine gemeinsame Ventilkammer aufweisen, von welcher aus die Luft in Richtung Zahnradpumpe strömt.

Die Ventileinheit kann wie beschrieben in der Zusatzeinheit angeordnet sein, oder aber in einem anderen Teil der Getränkezubereitungsmaschine, insbesondere in der Grundeinheit. In diesem Fall wird die Zusatzeinheit mit einem schon eingestellten variablen Luftstrom versorgt.

Das **Computerprogramm** ist zur Ausführung auf einem Bediengerät zur Bedienung einer Getränkezubereitungsmaschine zum Herstellen eines Gesamtprodukts aus mindestens drei Teilprodukten vorgesehen. Das Computerprogramm führt bei Ausführung auf dem Bediengerät die folgenden Schritte aus:
- Darstellen eines ersten Mengenanteils und mindestens eines zweiten Mengenanteils und eines dritten Mengenanteils, durch Anzeigen auf einem Bildschirm des Bediengerätes, einer graphischen Darstellung der Mengenanteile, mit jeweils einer Anteilsanzeige pro Mengenanteil, wobei eine Grösse der Anteilsanzeige im wesentlich proportional zum entsprechenden Mengenanteil ist;
- Erfassen von Benutzereingaben zur Anpassung der Grösse mindestens einer der Anteilsanzeigen; und
- Anpassen der Grösse dieser Anteilsanzeige und damit des entsprechenden Mengenanteils nach Massgabe der Benutzereingaben.
- Übermitteln von Informationen, welche die Benutzereingabe und insbesondere die erfassten Mengenanteile repräsentieren, über eine Kommunikationsverbindung.

Zum Erfassen der Benutzereingabe kann die Darstellung von anpassbaren Zubereitungsparametern zunächst gespeicherte Initialwerte (oder Defaultwerte) anzeigen, die dann durch den Benutzer ggf. angepasst werden.

In Ausführungsformen werden bei Ausführung des Computerprogramms weitere Schritte des hier beschriebenen Verfahrens ausgeführt.

Das Computerprogramm zur Ausführung auf einem Bediengerät zur Bedienung einer Getränkezubereitungsmaschine ist in einen internen Speicher einer digitalen Datenverarbeitungseinheit des Bediengerätes ladbar und weist Computerprogrammcodemittel auf, welche, wenn sie in der digitalen Datenverarbeitungseinheit des Bediengerätes ausgeführt werden, diese zur Ausführung der für das Bediengerät vorgesehenen Schritte des oben beschriebenen Verfahrens bringen. Ein Computerprogrammprodukt weist einen Datenträger, respektive ein computerlesbares Medium auf, auf welchem die Computerprogrammcodemittel gespeichert sind.

Weitere bevorzugte Ausführungsformen gehen aus den abhängigen Patentansprüchen hervor. Dabei sind Merkmale der Verfahrensansprüche sinngemäss mit den System- und Computerprogrammansprüchen kombinierbar und umgekehrt.

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: ein System zur Getränkezubereitung;
- Figur 2-8: beispielhafte Anzeigen auf einer Interfaceeinheit zur Zubereitung eines Produktes, sowie Elemente solcher Anzeigen; und
- Figur 9: eine Zusatzeinheit als Milchschäumergerät.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

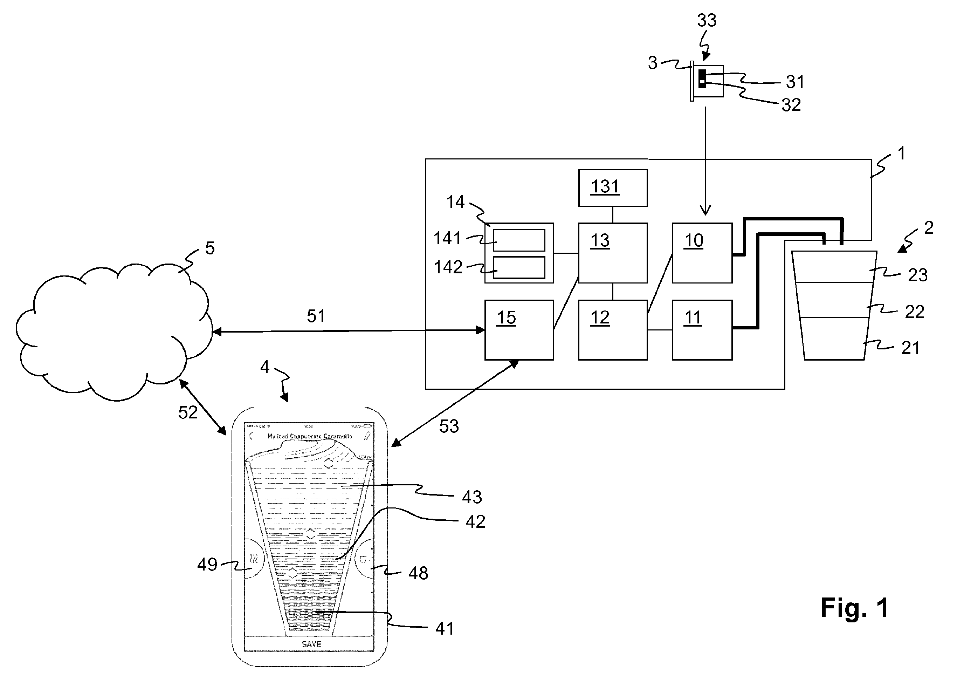

**Figur 1** zeigt ein **System** zur Getränkezubereitung mit einer Getränkezubereitungsmaschine 1 zum Befüllen eines Behälters 2 mit mindestens einem Extraktionsgut aus einer Portionspackung 3. Die Getränkezubereitungsmaschine 1 kann über eine erste Kommunikationsverbindung 51 mit einem Kommunikationsnetzwerk 5 wie einem Intranet oder dem Internet verbunden sein. Ein Bediengerät 4, welches mobil und tragbar sein kann, beispielsweise ein Mobiltelefon oder Smartphone, oder ein dediziertes Gerät welches nur zur Bedienung der Getränkezubereitungsmaschine 1 vorgesehen ist, kann indirekt über eine zweite Kommunikationsverbindung 52 und das Kommunikationsnetzwerk 5 oder direkt über eine dritte Kommunikationsverbindung 53 mit der Getränkezubereitungsmaschine 1 kommunizieren.

Die Getränkezubereitungsmaschine 1 weist eine **Grundeinheit** 10 zum Extrahieren eines **Extraktionsprodukts** mittels einer Extraktionsflüssigkeit auf. Die Getränkezubereitungsmaschine 1 ist beispielsweise eine Portionskapsel-Kaffeemaschine der an sich bekannten Art, wobei die Grundeinheit 10 ein Brühmodul und die Extraktionsflüssigkeit heisses und unter Druck stehendes Wasser ist. Das Extraktionsprodukt wird dem Behälter 2 zugeführt.

Die **Portionspackung** 3 weist eine Portionsverpackung (bspw. Kapsel) und ein in der Portionsverpackung enthaltenes Extraktionsgut (bspw. Kaffee) auf.

Die Getränkezubereitungsmaschine 1 weist eine **Zusatzeinheit** 11 auf, welche mindestens ein weiteres **Produkt** oder **Teilprodukt** fördern oder erzeugen kann, beispielsweise Milch und/oder Milchschaum, welche ebenfalls dem Behälter 2 zugeführt werden. Die Zusatzeinheit 11 kann Heizelemente und/oder Kühlelemente zum Aufheizen oder Abkühlen des mindestens einen weiteren Produktes aufweisen.

Das Extraktionsprodukt und das mindestens eine Teilprodukt werden gleichzeitig oder sequentiell dem Behälter 2 zugeführt und bilden zusammen im Behälter 2 ein Gesamtprodukt, beispielsweise einen "Caffe Macchiato" bestehend aus Kaffee, kalter oder warmer Milch, und kaltem oder warmem Milchschaum. Ein Gesamtprodukt ist schematisch als bestehend aus einem ersten Anteil 21, einem zweiten Anteil 22 und einem dritten Anteil 23 bestehend dargestellt. Die Anteile können je nach Zubereitungsvorschrift im Behälter 2 übereinander geschichtet oder gemischt sein. Unter "Anteil" wird ein Volumenanteil oder Mengenanteil verstanden.

Die Getränkezubereitungsmaschine 1 weist zur Steuerung der Grundeinheit 10 und der Zusatzeinheit 11, zur Bedienung durch einem Benutzer und zur optionalen Kommunikation mit anderen Geräten eine Steuereinheit 12, eine übergeordnete Steuereinheit 13, eine Bedieneinheit 14 und eine Kommunikationseinheit 15 auf.

Die **Steuereinheit** 12 ist zur Ansteuerung der Grundeinheit 10 und Zusatzeinheit 11 eingerichtet, beispielsweise indem sie die Pumpen Ventile, Heizelemente etc. dieser Einheiten ansteuert und Messwerte von Temperaturen, Drücken, Durchfluss etc. erfasst und verarbeitet. Die Funktion der Steuereinheit 12 kann durch eine einzige physische elektronische Einheit, beispielsweise einen Mikrokontroller, realisiert werden, oder durch mehrere physikalische Einheiten oder Mikrokontroller, welche jeweils der Grundeinheit 10 und der Zusatzeinheit 11 zugeordnet sind und miteinander über einen Kommunikationsbus kommunizieren oder über Signalleitungen einzelne analoge oder binäre Signale übermitteln.

Die **übergeordnete Steuereinheit** 13 ist zur Ansteuerung der Bedieneinheit 14 und er Kommunikationseinheit 15 eingerichtet. Die übergeordnete Steuereinheit 13 kann physikalisch und/oder programmtechnisch getrennt von der Steuereinheit 12 realisiert sein, oder aber zusammen mit der Steuereinheit 12 eine einzige Einheit bilden. In diesem Sinne können gemäss Ausführungsformen die Steuereinheit 12 und die übergeordnete Steuereinheit 13 identisch sein.

Die **Bedieneinheit** 14 weist eine Eingabeeinheit 141, mit beispielsweise Schaltern, Tastern und/oder einer Jog-Dial oder Einstellrad und/oder einer berührungsempfindlichen Fläche auf, sowie eine Ausgabeeinheit 142 mit optischen Anzeigemitteln wie Leuchten oder einem Bildschirm etc. und/oder akustischen Anzeigemitteln wie einem Lautsprecher, Summer, etc..

Die **Kommunikationseinheit** 15 ist zur Kommunikation über die erste Kommunikationsverbindung 51, die drahtlos (beispielsweise mittels Wi-Fi, Bluetooth, etc.) oder drahtgebunden (beispielsweise mittels Ethernet, USB) sein kann, eingerichtet, insbesondere zur Kommunikation mit dem Kommunikationsnetzwerk 5. Ferner kann die Kommunikationseinheit 15 drahtlos (beispielsweise mittels Wi-Fi, Bluetooth, NFC, etc.) oder drahtgebunden (beispielsweise mittels USB) mit dem Bediengerät 4 kommunizieren. Die Kommunikationseinheit 15 kann auch zum Auslesen und Beschreiben eines entfernbaren portablen Datenträgers eingerichtet sein, beispielsweise über eine USB-Schnittstelle oder SD-Kartenschnittstelle.

Das **Bediengerät** 4, typischerweise ein Mobiltelefon oder Smartphone, weist ein Benutzerinterface 44 auf, beispielsweise einen berührungsempfindlichen Bildschirm oder Touchscreen, welcher als Ein- und Ausgabeeinheit funktioniert. Zusätzlich oder alternativ können auch Taster des Bediengerätes 4 als Eingabeeinheiten dienen. Zusätzlich oder alternativ kann eine Spracheingabe realisiert sein.

Wo nicht anders erwähnt, können Informationen an den Benutzer und Eingaben des Benutzers über die Bedieneinheit 14 und/oder das Bediengerät 4 ausgegeben respektive eingegeben werden. Wenn in der vorliegenden Beschreibung also Interaktionen mit dem Benutzer beschrieben sind, versteht sich, dass damit Ausgaben respektive Eingaben mittels der Bedieneinheit 14 und/oder mittels des Bediengerätes 4 gemeint sind. Verallgemeinert können diese daher als Interfaceeinheit bezeichnet werden.

Die übergeordnete Steuereinheit 13 weist einen Speicher 131 auf, in welchem unter anderem **Zubereitungsvorschriften** oder Rezepte gespeichert sind. Eine Zubereitungsvorschrift weist mindestens **Steuerinformationen** auf, die in Befehle zur Steuerung der Grundeinheit 10 und der Zusatzeinheit 11 umgesetzt werden können. Solche Steuerinformationen weisen einerseits **Ablaufinformationen** auf, welche einen Ablauf von Schritten spezifizieren, die durch die Grundeinheit 10 und/oder die Zusatzeinheit 11 zum Erzeugen eines Gesamtprodukte auszuführen sind. Andererseits weisen die Steuerinformationen beispielsweise Temperaturen, Volumenangaben, Zeitangaben, etc. auf - im Folgenden allgemein auch **Zubereitungsparameter** genannt - welche einen Ablauf parametrisieren.

Ablaufinformationen repräsentieren beispielsweise "Heizung der Zusatzeinheit einschalten; Pumpe des Brühmoduls während fünfzehn Sekunden einschalten; nach Abschalten der Pumpe mindestens fünf Sekunden warten bis Heizung auf Solltemperatur ist; Milchpumpe während zwölf Sekunden einschalten". Die in diesem Beispiel erwähnten Zeiten und Temperaturen können durch Zubereitungsparameter spezifiziert sein und/oder durch die Steuerung nach Massgabe von andern Zubereitungsparametern und Sensormesswerten bestimmt werden.

Eine Zubereitungsvorschrift kann auch **Benutzeranweisungen** enthalten. Diese Anweisungen sind Teil der Zubereitung des Gesamtproduktes und müssen durch einen Benutzer ausgeführt werden. Dazu können die Benutzeranweisungen mittels der Ausgabeeinheit 142 oder des Benutzerinterface 44 des Bediengerätes 4 angezeigt werden. Beispielsweise sind solche Benutzeranweisungen "Jetzt Eiswürfel hinzufügen" oder "Bitte 20ml Karamelsirup abmessen" oder "Jetzt den vorbereiteten Karamelsirup hinzufügen" oder "Bitte umrühren" oder "Bitte überprüfen, ob eingelegte Kapsel und angewähltes Rezept zusammenpassen" etc. Eine Benutzeranweisung kann von einer visuellen Darstellung begleitet sein, beispielsweise des herzustellenden Gesamtproduktes, einer ausgewählten oder einer tatsächlich eingelegten Kapsel etc.

**Zur Zubereitung eines Produktes** werden entsprechend der Zubereitungsvorschrift Steuerinformationen respektive entsprechende Befehle durch die Grundeinheit 10 und Zusatzeinheit 11 umgesetzt und damit ein Zubereitungsablauf realisiert. Falls Zubereitungsvorschrift Benutzeranweisungen aufweist, werden diese an entsprechenden Stellen des Ablaufs dem Benutzer angezeigt. Nach einer Quittierung durch den Benutzer mittels der Eingabeeinheit 141 oder dem Benutzerinterface 44, welche dem System die Ausführung der Benutzeranweisung bestätigt, werden nachfolgende Steuerinformationen des Zubereitungsablaufs umgesetzt.

Eine Zubereitungsvorschrift kann Zubereitungsparameter aufweisen, die durch den Benutzer angepasst werden dürfen, sowie Zubereitungsparameter, die nicht durch den Benutzer anpassbar sind. **Anpassbare Zubereitungsparameter** sind beispielsweise (Volumen)Anteile von Teilprodukten im Gesamtprodukt, eine Gesamtmenge, oder die Temperatur eines Teilproduktes. Für anpassbare Zubereitungsparameter kann die Zubereitungsvorschrift einen Standardwert oder Defaultwert enthalten, welcher verwendet wird, wenn der Benutzer den Parameter nicht anpasst.

Zur Anpassung von anpassbaren Zubereitungsparametern wird dem Benutzer auf der Bedieneinheit 14 der Getränkezubereitungsmaschine 1 oder dem Benutzerinterface 44 des Bediengerätes 4 eine Auswahl eines oder mehrere solcher Zubereitungsparameter angezeigt und wird eine Eingabe des Benutzers zur Anpassung des Zubereitungsparameters erfasst. Die Eingabe kann durch Betätigen von realen Tastern und/oder von virtuellen Tastern wie Schaltflächen oder "Buttons", insbesondere "Pfeiltasten" und/oder von verschiebbaren Markierungen oder "Slider" auf einem Touchscreen der Bedieneinheit 14 oder des Bediengerätes 4 erfolgen.

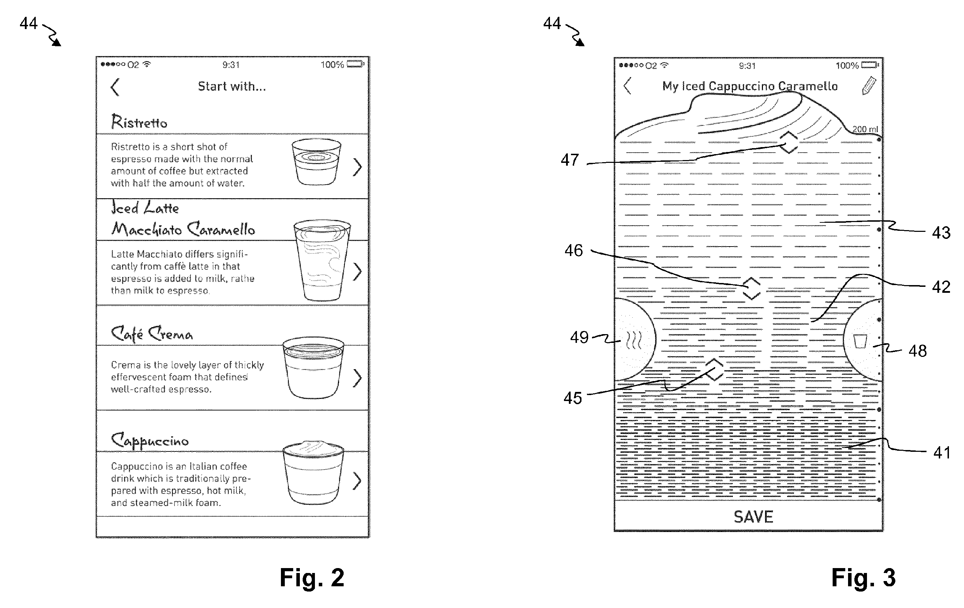

Grundsätzlich können alle Arten von Parametern in dieser Weise angepasst werden. Im Folgenden wird die Anpassung von Anteilen von Teilprodukten an einem Gesamtprodukt beschrieben. Gemäss der in **Figur 1** gezeigten Darstellung geschieht die Eingabe durch Verschieben von Markierungen, im Folgenden Einstellsymbole 45, 46, 47 genannt, auf einem Bildschirm, insbesondere einem Touchscreen des Bediengerätes 4 oder der Bedieneinheit 14. Dabei werden die Einstellsymbole 45, 46, 47 auf einer symbolischen Darstellung des Gesamtproduktes mit den Teilprodukten dargestellt. Es kann dabei ein Behälter im Querschnitt dargestellt werden (wie in der **Figur 1**), oder es kann die gesamte Breite des Bildschirms mit einer Darstellung der Teilprodukte ausgefüllt sein (siehe **Figur 3**).
- Diese Darstellung kann so skaliert sein, dass ungeachtet der zu produzierenden Gesamtmenge des Gesamtproduktes (idealerweise entsprechend der Grösse respektive dem Volumen eines gewählten Behälters 2) in der Darstellung die Gesamtmenge stets mit derselben Grösse dargestellt wird. Die Darstellung gibt in diesem Fall nur eine Aussage über die relativen Anteile der Teilprodukte am Gesamtprodukt.
- Diese Darstellung kann alternativ so skaliert sein, dass die dargestellte Gesamtmenge proportional zu der zu produzierenden Gesamtmenge des Gesamtproduktes dargestellt wird. Die Darstellung gibt in diesem Fall eine Aussage über die absolute Menge der Teilprodukte und des Gesamtprodukts.

Eine gegenseitige Lage der Einstellsymbole entlang einer linearen Achse repräsentiert den Anteil respektive die Menge oder einen Füllstand von Teilprodukten am Gesamtprodukt. Im gezeigten Beispiel ist eine vertikale Schichtung der Teilprodukte im Behälter 2 angezeigt. Dabei repräsentiert eine erste Anteilsanzeige 41 den Anteil eines ersten Teilprodukts und kann dieser Anteil auf dem Touchscreen durch Verschieben eines ersten Einstellsymboles 45 durch den Benutzer angepasst werden. Beispielsweise ist das erste Teilprodukt Kaffee. Analog repräsentieren eine zweite Anteilsanzeige 42 mit einem zweiten Einstellsymbol 46 und eine dritte Anteilsanzeige 43 mit einem dritten Einstellsymbol 47 als weitere Teilprodukte Milch und Milchschaum. Falls kein Touchscreen vorliegt, können die Einstellsymbole durch Taster angepasst werden.

Weitere Elemente zur Anpassung von Zubereitungsparametern sind ein Behälterwahlsymbol 48 und ein Temperaturwahlsymbol 49. Bei aktiviertem Behälterwahlsymbol 48, beispielsweise nach Berühren des Behälterwahlsymbols 48, wird eine Auswahl von Behältern mit verschiedenen Volumina angezeigt und ist eine Wahl des Benutzers erfassbar. In analoger Weise ist bei aktiviertem Temperaturwahlsymbol 49 die Wahl einer Temperatur eines der Teilprodukte, hier Milch, erfassbar. Es ist dabei eine Wahl von diskreten, vorgegeben Temperaturen oder Behältergrössen möglich, in anderen Ausführungsformen eine stufenlose Wahl.

Die Software zur Anzeige der Darstellung und zum Erfassen der Benutzereingaben kann die Benutzereingaben auf physikalisch und technisch sinnvolle Werte einschränken. Beispielsweise kann, wenn eine Portionspackung 3 eingelegt ist, zwingend eine Mindestmenge von Kaffee, beispielsweise 20 ml, entsprechend der ersten Anteilsanzeige 41 vorgegeben werden. Es kann also das erste Einstellsymbol 45 nicht unter einen entsprechenden Wert bewegt werden. Versucht der Benutzer dies trotzdem, kann eine Meldung angezeigt werden. Ferner kann beispielsweise das dritte Einstellsymbol 47 nicht über einen oberen Rand eines dargestellten ausgewählten Behälters bewegt werden. Oder es kann, wenn die Vergrösserung der Menge eines der Teilprodukte dazu führt, dass die Gesamtmenge das Volumen des gewählten Behälters 2 übersteigt, entweder die weitere Verschiebung des entsprechenden Einstellsymbols 45, 46, 47 verhindert werden, oder es kann der Anteil eines der anderen Teilprodukte automatisch verringert werden, so dass die Gesamtmenge auf das Volumen des Behälters 2 begrenzt wird. Weiter kann berücksichtigt werden, dass bei der Herstellung eines bestimmten Teilproduktes (beispielsweise Milchschaum) auch eine gewisse Menge eines anderen Teilproduktes (in diesem Beispiel Milch) gefördert wird.

Das Bediengerät 4 übermittelt Informationen, welche die erfassten Benutzereingaben wie Mengenanteile, Wahl des Behälters oder Gesamtmenge, Temperaturwahl etc. repräsentieren, direkt über die dritte Kommunikationsverbindung 53 oder indirekt über die zweite Kommunikationsverbindung 52 und die erste Kommunikationsverbindung 51 an die Getränkezubereitungsmaschine 1.

**Figuren 2** bis **7** zeigen eine Folge von beispielhaften Anzeigen auf dem Bediengerät 4 oder allgemein einer Interfaceeinheit zur Zubereitung eines Produktes. **Figur 2** zeigt einen Auswahlbildschirm zur Auswahl einer von mehreren Zubereitungsvorschriften. Nach dem Tätigen einer Auswahl wird ein Anpassungsbildschirm zur Anpassung von Zubereitungsparametern gemäss **Figur 3** angezeigt. Dessen Elemente wurden bereits im Zusammenhang mit der **Figur 1** erklärt.

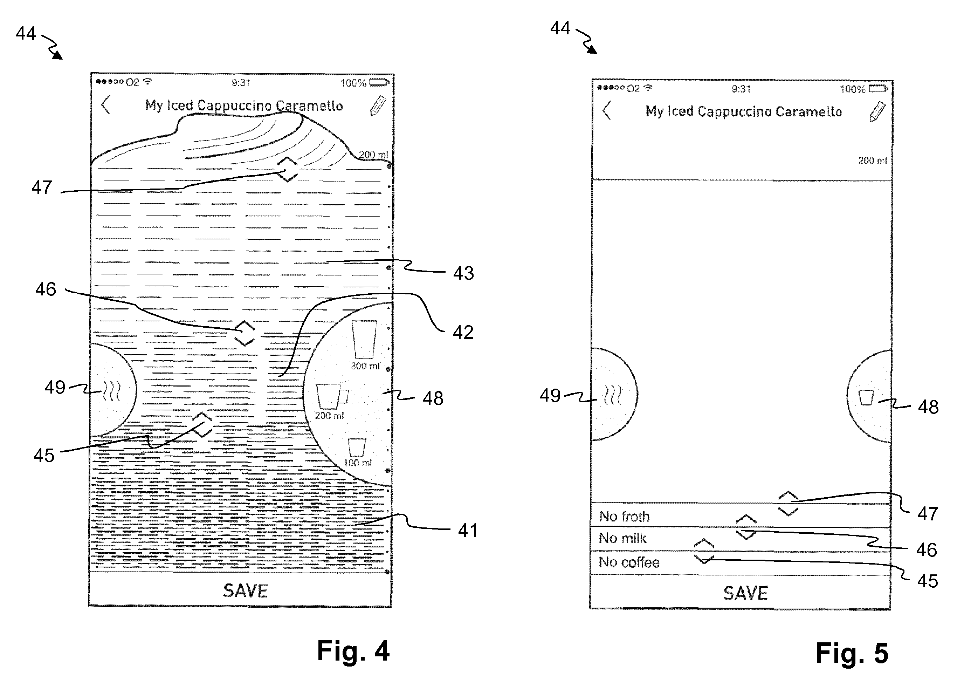

**Figur 4** zeigt den Anpassungsbildschirm nach einem Aktivieren des Behälterwahlsymbols 48: es werden mehrere Behältersymbole angezeigt, von denen eines ausgewählt werden kann. **Figur 5** zeigt den Anpassungsbildschirm in einem Zustand, in dem alle Einstellsymbole 45, 46, 47 auf eine minimale Position, entsprechend einem Anteil von Null, ganz nach unten bewegt wurden. Zum Herstellen des Gesamtproduktes müsste mindestens eines der Einstellsymbole 45, 46, 47 auf einen von Null verschiedenen Anteil verschoben werden.

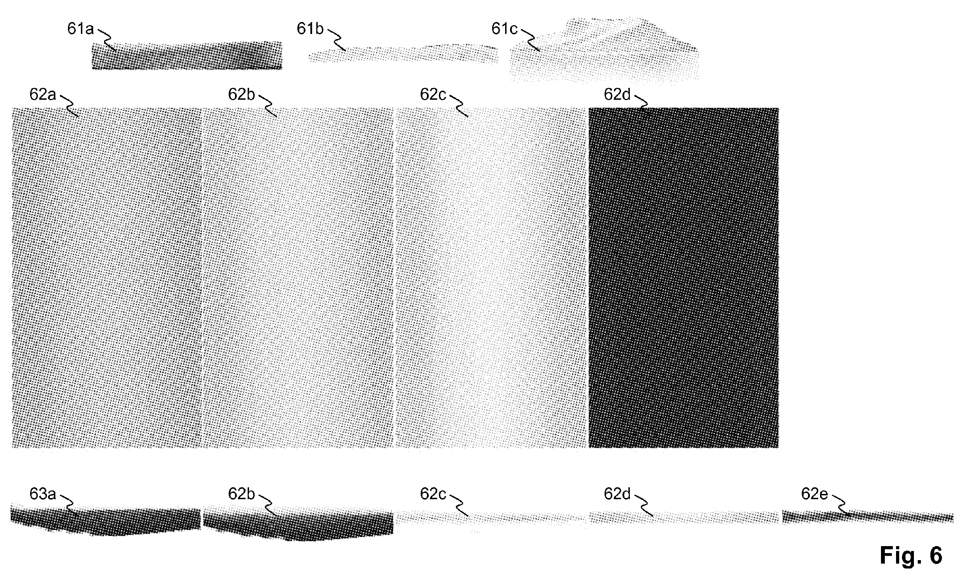

**Figur 6** zeigt Elemente einer bildlichen Darstellung der Anteilsanzeigen für Bereiche, in welchem Anteilsanzeigen aneinander grenzen, und/oder wo die Darstellung eines Teilproduktes nach Massgabe des Vorhandenseins eines zweiten Teilproduktes angepasst ist. Hier sind die Teilprodukte Kaffee, Milch und Milchschaum und es sind in der Figur die folgenden Elemente gezeigt:
- Varianten 61a-c eines obersten Abschlusses, d.h. zum Abschluss der Anzeige am oberen Rand der Anzeige des obersten Anteils: 61 a - bei Kaffee; 61b - bei Milch; 61c - bei Milchschaum.
- Varianten 62a-d von Anteilsanzeigen: 61 a - Milch, falls Kaffee im Gesamtprodukt vorhanden ist (leicht bräunlich eingefärbt); 61 b - Milch, falls kein Kaffee im Gesamtprodukt vorhanden ist (heller als 61 a und dunkler als 61 c); 61c - Milchschaum; 61d - Kaffee.
- Varianten 63a-e von Übergängen, wo Anteilsanzeigen aneinander grenzen: 63a - Übergang zwischen Kaffee und darüber liegender Milch oder einem darüber liegenden Abschluss von Kaffee; 63b - Übergang zwischen Kaffee und darüber liegendem Schaum; 63c - Übergang zwischen Milch und darüber liegendem Schaum, falls Kaffee im Gesamtprodukt vorhanden ist (der untere Teil, entsprechend der Milch, ist leicht bräunlich eingefärbt); 63d - Übergang zwischen Milch und darüber liegendem Schaum, falls kein Kaffee im Gesamtprodukt vorhanden ist (der untere Teil, entsprechend der Milch, ist heller als bei 63c); 63e - Übergang zwischen Milch und darüber liegendem Kaffee (Latte Macchiato).

Gemäss weiteren, nicht dargestellten Ausführungsformen ist die Anzeige in weiterer Art naturalistisch gestaltet, beispielsweise durch Darstellung von Bläschen im Milchschaum, durch Schlieren in Milch oder Kaffee, durch Animation solcher Bläschen oder Schlieren oder durch langsame wellenartige Bewegungen im Bereich der Übergänge etc. Gemäss anderen Ausführungsformen ist die Anzeige nicht naturalistisch sondern abstrahiert, mit einer einheitlichen Farbe pro Anteilsanzeige und klaren Übergängen zwischen den Anteilsanzeigen.

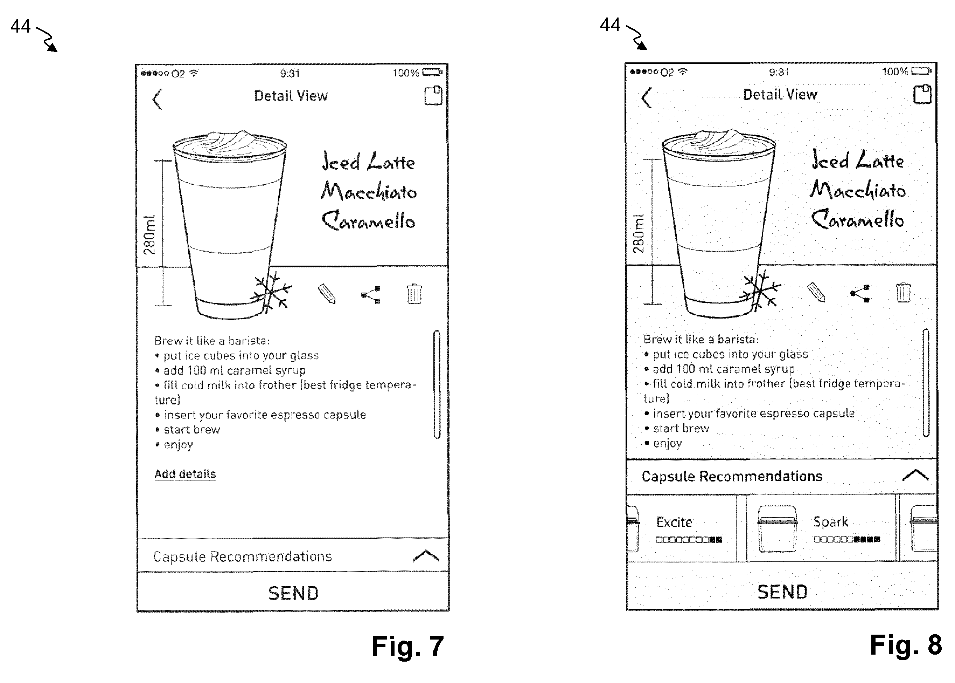

**Figur 7** zeigt einen anschliessend an das Anpassen der Zubereitungsparameter dargestellten Bildschirm mit Benutzeranweisungen. Einer der durch den Benutzer auszuführenden Schritte ist die Wahl einer Kaffeekapsel. Auf Wunsch kann dazu eine Schaltfläche "Capsule Recommendations" aktiviert werden. Falls dies geschieht, werden wie in **Figur 8** gezeigt eine oder mehrere Sorten von Kaffeekapseln angezeigt, die für die anfangs gewählte Zubereitungsvorschrift geeignet sind, ggf. unter Berücksichtigung der Zubereitungsparameter. Die Bestimmung, welche Sorte von Kapseln geeignet ist, kann durch eine vorgegebene Zuordnung von Kapselsorten zu Zubereitungsvorschriften geschehen. Sie kann aber auch anhand der Zubereitungsparameter, insbesondere der absoluten und/oder der relativen Mengenanteile der Teilprodukte geschehen. Im einfachsten Fall können z.B. bei einer Zubereitungsvorschrift, die eine relativ kleine Kaffeemenge vorgibt, Espressokapseln zugeordnet werden.

Gemäss einer weiteren Ausführungsform kann ein Benutzer einer Zubereitungsvorschrift gemäss seiner Präferenz eine oder mehrere bestimmte Kapselsorten zuweisen und diese Zuordnung speichern. Bei einer späteren Auswahl der Zubereitungsvorschrift können diese zugeordneten Kapselsorte(n) angezeigt werden. In einer Anzeige von gemäss der Figur 8 kann dies geschehen, indem diese Kapselsorte(n) visuell markiert und so hervorgehoben werden, beispielsweise durch ein hinzugefügtes Symbol und/oder durch einen andersfarbigen Hintergrund oder Text. Weiter kann, falls der Benutzer beim Ausführen einer Zubereitungsvorschrift, welcher eine derart präferierte Kapselsorte zugeordnet ist, eine nicht präferierte Kapselsorte einlegt, eine Warnung oder Rückfrage angezeigt werden.

Die Portionspackung 3 ist mit einem maschinenlesbaren Portionencode 33 versehen. Dieser kann durch beispielsweise optisch, mechanisch oder drahtlos über Funk lesbare Informationsträger realisiert sein, oder durch eine Kombination von zwei oder mehr solcher Informationsträger. Der Portionencode 33 repräsentiert eine Portionenkategorie 31, welche eine Kategorie spezifiziert, welcher die Portionspackung 3 zugeordnet ist. Solche Kategorien können verschiedene Kategorien von Getränken oder Produkten sein, wie "Espresso", "Normalkaffee", "Filterkaffee", "Tee", und auch "Reinigungskapsel". Der Portionencode 33 repräsentiert ferner eine Portionenidentität 32, welcher die Portionspackung 3 zugeordnet ist. Solche Identitäten können bestimmte Einzelprodukte oder Sorten repräsentieren, wie "Arabica Nr. 42" oder "Colombia special". Portionspackungen 3 mit derselben Portionenkategorie 31 können unterschiedliche Portionenidentitäten 32 aufweisen. Mittels der Portionenkategorie 31 können also Portionspackungen 3 respektive entsprechende Produkte unterschiedlicher Identität zu Kategorien gruppiert werden.

Der Portionencode 33 kann durch eine mehrfach redundant codierte Repräsentation codiert sein, allgemein als optischer Code, beispielsweise als zehnfach redundanter optischer Code, beispielsweise ein ein- oder zweidimensionaler Barcode oder ein Code wie in den europäischen Patentanmeldungen EP 14 197 487.3 vom 11.12.2014 und EP 14 197 488.1 vom 11.12.2014 beschrieben. In einer Ausführungsform enthält der Portionencode 33 sechzehn Bits, wovon sechs als Prüfbits dienen, vier zur Codierung der Portionenkategorie 31 und sechs zur Codierung der Portionenidentität 32.

Es kann in der Getränkezubereitungsmaschine 1 eine Zuordnung des Portionencodes 33, respektive von Portionenkategorien 31 und/oder Portionenidentitäten 32, zu jeweils empfohlenen oder zulässigen Bereichen für Zubereitungsparameter gespeichert sein. Damit kann nach dem Einlegen einer Portionspackung 3 anhand des Portionencodes 33 automatisch geprüft werden, ob die Portionspackung 3 mit den vom Benutzer vorgegebenen Mengenanteilen kompatibel ist. Ist dies nicht der Fall, kann eine Warnung angezeigt werden und/oder die weitere Verarbeitung der Portionspackung 3 gestoppt werden. Alternativ kann auch eine positive Meldung generiert werden, wenn die gewählte Kapsel sich für die gewählten Mengenanteile besonders gut eignet. Beispielsweise ist eine Espresso-Kapsel nicht optimal geeignet, wenn durch den Benutzer eine für einen normalen Kaffee vorgesehene Kaffeemenge gewählt wurde. Auch sind eine Reinigungskapsel oder eine Teekapsel grundsätzlich nicht geeignet, wenn die Zubereitung eines Getränkes mit Milch gewählt wurde.

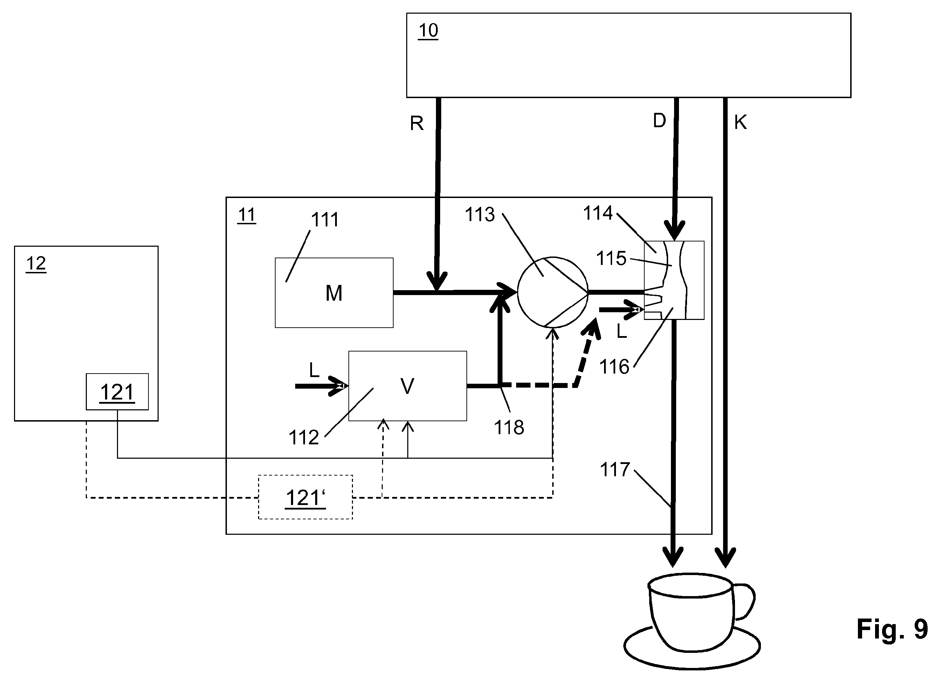

**Figur 9** zeigt ein Übersichtsschema einer Zusatzeinheit 11 welche als Milchschäumergerät zur Förderung respektive Zubereitung von sowohl Milch als auch Milchschaum ausgebildet ist, sowie ausgewählte Verbindungen der Zusatzeinheit 11 zu anderen Einheiten der Getränkezubereitungsmaschine 1. In der Figur bezeichnet "L" Luftzuführungen. Der Buchstabe D bezeichnet eine Leitung für Dampf, K eine Leitung für das Heissgetränk, R eine Leitung für Reinigungswasser- oder Dampf (optional).

Eine Ansteuerung 121 der Zusatzeinheit 11 ist hier als Teil der Steuereinheit 12 der Getränkezubereitungsmaschine 1 dargestellt. Alternativ kann eine lokale Ansteuerung 121' auch ganz oder teilweise als Teil des Milchschäumergeräts respektive der Zusatzeinheit 11 vorhanden sein. Diese Alternative ist in der Figur gestrichelt dargestellt.

Weitere Elemente des Milchschäumergeräts sind: Ein Milchbehälter 111, eine Ventileinheit 112, eine Zahnradpumpe 113 und eine Mischdüse 114. Die Ansteuerung 121 ist so ausgebildet, dass sie sowohl die Zahnradpumpe 113 als auch die Ventileinheit 112 ansteuern kann, wobei ein Betriebsparameter des Zahnrads und/oder der Ventileinheit regelbar ist. Solch regelbaren Betriebsparameter sind beispielsweise die Drehzahl der Zahnradpumpe oder ein aktiver Ventilquerschnitt der Ventileinheit. Die Ventileinheit 112 kann auch in einem anderen Teil der Getränkezubereitungsmaschine 1, beispielsweise in der Grundeinheit 10 angeordnet sein.

Die Zahnradpumpe 113 ist eingangsseitig mit einer Milchzuführleitung vom Milchbehälter 111 und mit einer Luftzuführung von der Ventileinheit 112 verbunden. Die Ventileinheit 112 weist einen stufenweise oder stufenlos variablen aktiven Ventilquerschnitt aktiven Ventilquerschnitt auf. Beispielsweise weist die Ventileinheit 112 eine Mehrzahl von Ventilelementen auf, die unabhängig voneinander geöffnet oder geschlossen werden können. Von der Zahnradpumpe 113 geförderte Milch oder Milchschaum gelangen in die Mischdüse 114, wo sie mit Luft und/oder Dampf gemischt werden können, und von über einen Milchschaumauslauf 117 in einen Behälter 2.

Dampf, der über den Dampfanschluss D eingespeist werden kann, gelangt via ein Ventil (nicht dargestellt) und durch eine Verengung 115 in eine Mischdüsenkammer 116. Durch den Dampffluss wird in der Mischdüsenkammer 116 ein Unterdruck erzeugt, durch welchen via entsprechende Zuführungen Milch und optional Luft angesaugt werden kann. Die Zuführungen, insbesondere für Luft, können mit Ventilen, beispielsweise Lippenventilen (engl. "duck bill valve") versehen sein. In der Mischdüsenkammer 116 entsteht Milchschaum, der durch den Milschschaumauslauf 117 abfliesst. Die geschäumte Milch ist aufgrund der vom Dampf abgegebenen Kondensationswärme warm.

Aufgrund einer kleinen Düsenöffnung, durch welche der Dampf mit hoher Geschwindigkeit durch die Verengung 115 austritt, ist die Mischdüse also so ausgestaltet, dass durch die Düsenwirkung ein Unterdruck erzeugt wird. Dieser unterstützt die Förderung der Milch aus der Milchleitung auch dann, wenn die Milch aufgrund der Zahnradpumpe aktiv gefördert wird.

Das Milchschäumergerät kann wie folgt betrieben werden:
Für die Zubereitung von kalter geschäumter Milch wird die Zahnradpumpe 113 in Gang gesetzt, während mindestens ein Ventilelement der Ventileinheit 112 geöffnet ist. Durch die Wirkung der Zahnradpumpe 113 wird an deren Eingangsseite ein Unterdruck erzeugt, welcher sowohl Milch aus dem Milchbehälter 111 als auch, Luft durch die Ventileinheit 112 ansaugt. In der Zahnradpumpe entsteht so Milchschaum, der durch die Mischdüse 114 und anschliessend durch den Milchschaumauslauf 117 in den Behälter 2 abgegeben wird.

Auch für die Zubereitung von warmer geschäumter Milch erfolgt das Ansaugen der - im Allgemeinen kalten - Milch aus dem Milchbehälter 3 über die Zahnradpumpe. 113 Diese fördert die Milch in die Mischdüse 114. Dieser wird gleichzeitig von der Grundeinheit 10 (Kaffeemaschine) her über den Dampfanschluss D Wasserdampf zugeführt. Der Wasserdampf erzeugt wie vorstehend dargestellt einen Unterdruck, welcher einerseits einen zusätzlichen Sog auf die Milch ausübt und die Förderung durch die Zahnradpumpe 113 unterstützt und andererseits durch das ebenfalls mindestens teilweise geöffnete Ventilelement 112 Luft ansaugt. In der Mischdüsenkammer 116 wird die Milch mit dem Wasserdampf vermischt, was sie erwärmt, und es wird gleichzeitig Luft untergemischt, so dass sich Luftbläschen bilden und Milchschaum entsteht. Die warme, geschäumte Milch wird durch den Milchschaumauslauf 117 abgegeben.

Es kann in einer Ausführungsform ein 3/2-Wegeventil 118 oder ein anderes Mittel wahlweise das Ventilelement 112 mit der Zahnradpumpe 113 oder der Mischdüsenkammer 116 verbinden (gestrichelte Leitung für Luft) für das Erzeugen des kalten bzw. warmen Milchschaums. Es ist auch möglich, dass die Luftzufuhr in die Mischdüsenkammer direkt und nicht über das Ventilelement 112 erfolgt, in welchem Fall dann die Luftzufuhr bei der Erzeugung von warmem Milchschaum nicht durch ein separates Mittel regelbar ist.

Es kann vorgesehen sein, dass die Zusatzeinheit 11 auch kalte Milch bloss fördern kann. In diesem Fall wird die Zahnradpumpe 113 angetrieben, es bleiben aber die Ventilelemente geschlossen, und es wird auch kein Dampf zugeführt.

Weiter kann vorgesehen sein, dass die Zusatzeinheit 11 warme Milch zubereiten kann. In diesem Fall ist das Ventilelement, durch welches Luft - direkt oder durch die Ventileinheit 112 - in die Mischdüse gelangen kann, verschlossen. Auch beim Vorsehen eines separaten Ventils für die Mischdüsenkammer (abweichend von der in den Figuren dargestellten Ausführungsform) besteht die Möglichkeit, das entsprechende Ventil verschliessbar auszugestalten. Ein Verschliessen des Ventils kann bspw. auch mechanisch von Hand durch den Benutzer vorgesehen sein. Zum Zubereiten von warmer Milch wird die Milch aus dem Milchbehälter 3 durch die Zahnradpumpe 113 gefordert und gleichzeitig in der Mischdüse 114 Wasserdampf zugeführt ohne dass auch Luft zugeführt wird. Durch das Vermischen der kalten Milch mit dem Wasserdampf entsteht warme Milch, die dann über den Milchschaumauslauf 117 abgegeben wird.

## Patentansprüche

1. Verfahren zum Betrieb einer Getränkezubereitungsmaschine (1), zur Herstellung eines Gesamtproduktes aus einem ersten Teilprodukt und mindestens einem zweiten Teilprodukt und einem dritten Teilprodukt, aufweisend die Schritte
• Erfassen einer Benutzereingabe zur Spezifikation eines ersten Mengenanteils (21) und mindestens eines zweiten Mengenanteils (22) und eines dritten Mengenanteils (23), wobei eine graphische Darstellung der Mengenanteile (21, 22, 23) dargestellt wird, mit jeweils einer Anteilsanzeige (41, 42, 43) pro Mengenanteil, wobei eine Grösse der Anteilsanzeige (41, 42, 43) im wesentlich proportional zum entsprechenden Mengenanteil (21, 22, 23) ist, und die Grösse mindestens einer der Anteilsanzeigen (41, 42, 43) und damit des entsprechenden Mengenanteils (21, 22, 23) nach Massgabe einer Benutzereingabe anpassbar ist;
• Herstellen des Gesamtproduktes als Kombination des ersten Teilprodukts und mindestens des zweiten Teilprodukts und des dritten Teilprodukts, mit einer Menge des ersten Teilprodukts entsprechend dem ersten Mengenanteil (21) und einer Menge des zweiten Teilprodukts entsprechend dem zweiten Mengenanteil (22), und einer Menge des dritten Teilprodukts entsprechend dem dritten Mengenanteil (23).

2. Verfahren gemäss Anspruch 1, wobei die Anteilsanzeigen (41, 42, 43) aneinander grenzende Abschnitte einer linearen Darstellung der Anteile auf einem berührungsempfindlichen Bildschirm sind und die Grösse der Anteilsanzeigen (41, 42, 43) durch Manipulation der Darstellung durch Berühren des berührungsempfindlichen Bildschirms durch den Benutzer anpassbar ist.

3. Verfahren gemäss Anspruch 2, wobei an Grenzen zwischen den Abschnitten Einstellsymbole (45, 46, 47) dargestellt werden, und die Grösse der Anteilsanzeigen (41, 42, 43) durch Verschieben der Einstellsymbole (45, 46, 47) durch den Benutzer anpassbar ist.

4. Verfahren gemäss Anspruch 2 oder 3, wobei die Anteilsanzeigen (41, 42, 43) Teil einer bildlichen Darstellung von übereinander geschichteten Anteilen der Teilprodukte am Gesamtprodukt sind, und insbesondere jeweils eine symbolische Darstellung des entsprechenden Teilprodukts unter Verwendung von Farbe und/oder Struktur des Teilprodukts beinhalten.

5. Verfahren gemäss einem der vorangehenden Ansprüche, wobei bei Anpassen eines der Mengenanteile eine Summe aller Mengenanteile (21, 22, 23) auf eine Gesamtmenge begrenzt wird.

6. Verfahren gemäss einem der vorangehenden Ansprüche, wobei das zweite Teilprodukt Milch und das dritte Teilprodukt Milchschaum ist, und ein zweiter Mengenanteil (22) entsprechend einer Menge Milch nach unten auf einen unteren Wert begrenzt ist, der eine Funktion des dritten Mengenanteils (23) entsprechend einer Menge Milchschaum ist.

7. Verfahren gemäss einem der vorangehenden Ansprüche, wobei ein erster Mengenanteil (21) nur entweder den Wert Null oder einen Wert annehmen kann, der über einem Mindestwert des ersten Mengenanteils liegt, insbesondere wobei das erste Teilprodukt entsprechend dem ersten Mengenanteil (21) Kaffee ist.

8. Verfahren gemäss einem der vorangehenden Ansprüche, mit dem Schritt:
• Erfassen einer Benutzereingabe zur Spezifikation einer Behältergrösse oder Gesamtmenge des Gesamtprodukts.

9. Verfahren gemäss einem der vorangehenden Ansprüche, mit dem Schritt:
• Erfassen einer Benutzereingabe zur Spezifikation einer Temperaturauswahl für mindestens eines der Teilprodukte.

10. **System**, aufweisend eine Getränkezubereitungsmaschine (1) zum Herstellen eines Gesamtprodukts aus mindestens drei Teilprodukten, und
• Eingabemittel zum Erfassen einer Benutzereingabe zur Spezifikation eines ersten Mengenanteils (21) und mindestens eines zweiten Mengenanteils (22) und eines dritten Mengenanteils (23);
• Zubereitungseinheiten zum Herstellen des Gesamtproduktes als Kombination eines ersten Teilprodukts und mindestens eines zweiten Teilprodukts und eines dritten Teilprodukts, mit einer Menge des ersten Teilprodukts entsprechend dem ersten Mengenanteil (21) und einer Menge des zweiten Teilprodukts entsprechend dem zweiten Mengenanteil (22) und einer Menge des dritten Teilprodukts entsprechend dem dritten Mengenanteil (23).

11. System gemäss Anspruch 10, wobei die Eingabemittel Teil der Getränkezubereitungsmaschine (1) sind.

12. System gemäss Anspruch 11, wobei die Eingabemittel an einem Bediengerät (4) ausgebildet sind, welches von der Getränkezubereitungsmaschine (1) getrennt ist, und wobei insbesondere das Bediengerät (4) ein Mobiltelefon oder Smartphone oder ein anders gearteter tragbarer Computer ist.

13. System gemäss einem der Ansprüche 10 bis 12, wobei das Bediengerät (4) zur Ausführung der in einem oder mehreren der Ansprüche 2 bis 7 genannten Schritte ausgebildet ist.

14. System gemäss einem der Ansprüche 10 bis 13, wobei das System eine Zusatzeinheit (11) aufweist, welche sowohl zum Zufuhren von Milch als zweitem Teilprodukt, optional unter Erwärmen der Milch, als auch zum Bilden und Zuführen von Milchschaum als drittem Teilprodukt zum Gesamtprodukt ausgebildet ist, wobei ein Mengenanteil an Milchschaum vorgebbar ist.

15. **Computerprogramm** zur Ausführung auf einem Bediengerät (4) zur Bedienung einer Getränkezubereitungsmaschine (1) zum Herstellen eines Gesamtprodukts aus mindestens drei Teilprodukten, wobei das Computerprogramm bei Ausführung auf dem Bediengerät (4) die folgenden Schritte ausführt:
• Darstellen eines ersten Mengenanteils (21) und mindestens eines zweiten Mengenanteils (22) und eines dritten Mengenanteils (23), durch Anzeigen, auf einem Bildschirm des Bediengerätes (4), einer graphischen Darstellung der Mengenanteile (21, 22, 23), mit jeweils einer Anteilsanzeige (41, 42, 43) pro Mengenanteil, wobei eine Grösse der Anteilsanzeige (41, 42, 43) im wesentlich proportional zum entsprechenden Mengenanteil (21, 22, 23) ist;
• Erfassen von Benutzereingaben zur Anpassung der Grösse mindestens einer der Anteilsanzeigen (41, 42, 43);
• Anpassen der Grösse dieser Anteilsanzeige (41, 42, 43) und damit des entsprechenden Mengenanteils (21, 22, 23) nach Massgabe der Benutzereingaben; und
• Übermitteln von Informationen, welche die Benutzereingabe und insbesondere die erfassten Mengenanteile repräsentieren, über eine Kommunikationsverbindung (52, 53).
